# FASCICULE DE BREVET EUROPEEN

(11) **EP 4 147 547 B1**
(45) Date de publication et mention de la délivrance du brevet: **17.12.2025**
(21) Numéro de dépôt: 22194499.4
(22) Date de dépôt: 08.09.2022
(51) Int. Cl.: A01B 3/46, A01B 63/22, A01B 3/426, A01B 73/00

(54) **CHARRUE RÉVERSIBLE AVEC UN SYSTÈME DE BLOCAGE D'UNE ROUE COMBINÉE**
DREHPFLUG MIT EINEM BLOCKIERSYSTEM FÜR EIN KOMBI RAD
REVERSIBLE PLOUGH WITH A LOCKING SYSTEM FOR A COMBINED WHEEL

(30) Priorité: 10.09.2021 FR 2109506
(43) Date de publication de la demande: 15.03.2023
(73) Titulaire: Kuhn-Huard S.A.S, 44110 Chateaubriant (FR)
(72) Inventeur: DUCROQUET, Frédéric, 44110 VILLEPOT (FR); MOREL, Mickaël, 35470 BAIN DE BRETAGNE (FR)
(74) Mandataire: Hager, Esther Evelyne

(56) Documents cités:
- EP-B1- 2 050 323
- DE-A1- 2 504 071
- DE-B1- 2 756 548

## Description

La présente invention concerne le domaine du machinisme agricole, plus particulièrement celui des charrues et notamment celles équipées d'au moins une roue combinée, et a pour objet une charrue réversible avec un système de blocage d'une roue combinée.

Les charrues réversibles, portées en configuration de travail, qui présentent un nombre de corps de labour important reposent partiellement lors des déplacements sur au moins une roue (qui peut éventuellement être doublée). Cette roue qui est utilisée au transport (fonction d'appui au sol de la charrue), est aussi utilisée comme roue de régulation pour le contrôle de la profondeur de travail des corps de labour : on parle de roue combinée.

Cette roue peut prendre plusieurs positions par rapport au bâti portant les corps de labour en fonction de la configuration de la charrue (pour une charrue réversible : labour à droite, labour à gauche, transport). A cet effet, la roue combinée est reliée au bâti par le biais d'un dispositif mécanique lui permettant de pivoter automatiquement, d'une position de travail à une autre position, autour d'un axe de retournement qui est sensiblement horizontal et parallèle à la direction d'avance. La roue combinée est maintenue dans une position correcte après sa rotation grâce à un dispositif de blocage.

Par le document EP 2875707, on connait une charrue portée réversible présentant une telle roue combinée et dans laquelle le verrouillage du dispositif de blocage est réalisé par la seule masse de la charrue exercée sur la roue combinée, quand la roue porte au sol.

Or, en cas de contact de la roue combinée avec le sol lors du retournement, le dispositif de blocage peut se coincer dans une position inadaptée et la charrue pourra alors être endommagée.

De plus, en position de transport, lorsque le dispositif de blocage n'est pas correctement engagé, la roue va tourner autour de son axe de pivotement et va se coucher.

En outre, en position de labour, lorsque le dispositif de blocage n'est pas correctement engagé, la roue se couche et il n'y a plus de maitrise de la profondeur de travail.

La présente invention a pour but de pallier ces inconvénients. Par les documents DE 27 56 548 B1, DE 25 04 071 A1 et EP 2 050 323 B1, on connait des moyens de blocage de charrue ayant une roue qui, pour le passage d'une configuration de travail à une autre, n'effectue cependant pas de rotation de 180° pour se positionner sur le côté opposé du bâti.

A cet effet, elle a pour objet une charrue réversible configurée pour être portée en configuration de travail par le dispositif d'attelage trois points du véhicule tracteur et comprenant, d'une part, un bâti portant des corps de labour et équipé d'un dispositif de roue combinée et, d'autre part, une tête d'attelage pour son accrochage à un véhicule tracteur, ladite roue combinée contrôlant la profondeur de travail des corps de labour, ledit bâti étant relié à la tête d'attelage par une liaison pivot définissant un axe de retournement pour le passage réversible d'une configuration de travail à l'autre, par pivotement d'environ un demi-tour et préférentiellement sous l'effet d'un actionneur, ladite charrue pouvant également être transposée, par pivotement d'un quart de tour environ du bâti, depuis une des configurations de travail dans une configuration de transport dans laquelle elle est trainée par traction et roule en appui sur ladite au moins une roue combinée, ledit dispositif de roue combinée comprenant au moins un bras support portant la roue et monté à pivotement autour d'un axe de réglage de la position en profondeur de la roue et un axe de basculement autorisant un basculement de la roue avec son bras support sous l'effet de son propre poids lors du retournement du bâti pour passer d'une configuration de travail à l'autre, ou vers la configuration de transport, ledit axe de basculement étant sensiblement parallèle à l'axe de retournement et sensiblement perpendiculaire à l'axe de réglage, et ledit dispositif de roue combinée comprenant également des moyens de blocage de la rotation dudit bras support autour de l'axe de basculement, au moins dans deux positions angulaires associées aux configurations de travail, charrue dont lesdits moyens de blocage comprennent des surfaces de blocage respectives, préférentiellement planes, dont la mise en contact mutuelle bloque la rotation du bras support autour dudit axe de basculement et en ce qu'elle comprend deux moyens de contrôle de cette mise en contact, mutuellement antagonistes et dont l'un au moins est un actionneur commandable.

L'invention sera mieux comprise, grâce à la description ci-après, qui se rapporte à des modes de réalisation préférés, donnés à titre d'exemples non limitatifs, et expliqués avec référence aux dessins schématiques annexés, dans lesquels :
[Fig. 1A] est une vue en élévation latérale d'une charrue portée réversible selon l'invention équipée d'un dispositif de roue combinée arrière, ladite charrue étant en configuration de travail et le dispositif de roue étant verrouillé en rotation au niveau de son axe de basculement ;
[Fig. 1B] est une vue en élévation latérale d'une charrue portée réversible selon l'invention équipée d'un dispositif de roue combinée arrière, ladite charrue étant dans une configuration de transport et le dispositif de roue étant verrouillé en rotation au niveau de son axe de basculement ;
Fig. 2] et
   [Fig. 3] sont des vues partielles de détail, respectivement en perspective et en élévation latérale du dispositif de roue combinée monté à l'arrière du bâti sur les figures 1, ce dispositif étant verrouillé en rotation autour de l'axe de basculement en relation avec une configuration de labour à droite de la charrue et la roue étant positionné en position relevée maximale ou profondeur de travail maximale ;
[Fig. 4] est une vue partielle de détail et en élévation, similaire à la figure 3, d'un autre exemple de réalisation du dispositif de roue combinée monté latéralement (représenté en traits interrompus sur les figures 1), le dispositif de roue étant déverrouillé et la roue libre en rotation autour de son axe de basculement ;
[Fig. 5] est une vue partielle et en demi-coupe montrant le positionnement relatif des moyens coopérants de blocage du dispositif de roue combinée lorsque la roue est dans une position en relation avec une mise en œuvre d'un retournement de la charrue sur une parcelle en dévers (ici de 25° environ), montrant le positionnement de la roue sous l'effet de la pesanteur, ainsi que la sollicitation en rotation généré par les premiers moyens de contrôle ;
[Fig. 6] est une vue similaire à celle de la figure 5 montrant le positionnement relatif des moyens coopérants de blocage du dispositif de roue combinée après atteinte de l'état verrouillé sous l'effet de la sollicitation (permettant de déduire le positionnement de la roue ;
[Fig. 7] et
   [Fig. 8] sont des vues partielles de détail, selon un plan contenant l'axe de basculement et perpendiculaire à l'axe de pivotement du bras support de la roue (axe de réglage de la profondeur) du dispositif de roue des figures 2 et 3, respectivement en position relevée maximale (figure 7) et à l'état déverrouillé (roue libre en rotation autour de son axe de basculement).

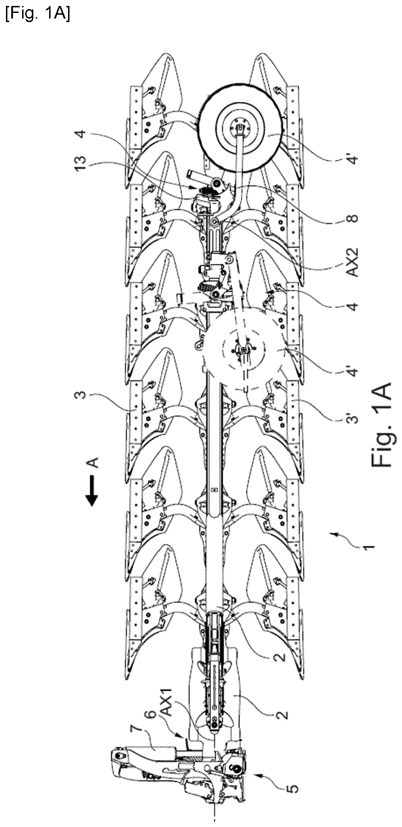

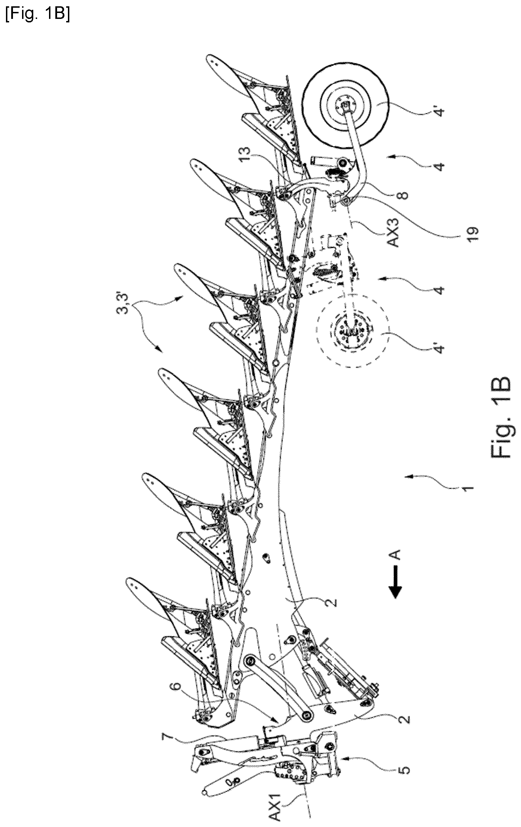

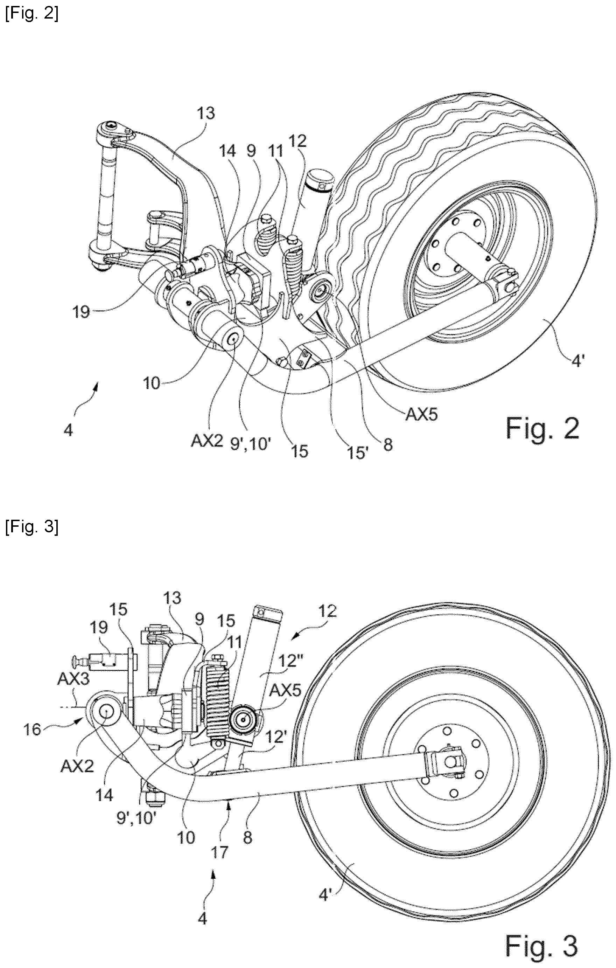

Les figures 1A et 1B, et partiellement les figures 2 à 6, montrent une charrue réversible (1) comprenant, d'une part, un bâti (2) portant des corps de labour (3, 3') et équipé d'un dispositif (4) de roue combinée (4') et, d'autre part, une tête d'attelage (5) pour son accrochage à un véhicule tracteur, ladite roue combinée (4') contrôlant la profondeur de travail des corps de labour (3, 3'). Ledit bâti (2) est relié à la tête d'attelage (5) par une liaison pivot (6) définissant un axe de retournement (AX1) pour le passage réversible d'une configuration de travail à l'autre, par pivotement d'environ un demi-tour et préférentiellement sous l'effet d'un actionneur (7), ladite charrue (1) pouvant également être transposée, par pivotement d'un quart de tour environ du bâti (2), depuis une des configurations de travail dans une configuration de transport dans laquelle elle est trainée par traction et roule en appui sur ladite au moins une roue combinée (4'). Le dispositif (4) de roue combinée (4') comprend au moins un bras support (8) portant la roue (4') et monté à pivotement autour d'un axe (AX2) de réglage de la position en profondeur de la roue (4') et un axe de basculement (AX3) autorisant un basculement de la roue (4') avec son bras support (8) sous l'effet de son propre poids lors du retournement du bâti (2) pour passer d'une configuration de travail à l'autre, ou vers la configuration de transport. Cet axe de basculement (AX3) est sensiblement parallèle à l'axe de retournement (AX1) et sensiblement perpendiculaire à l'axe de réglage (AX2). Ledit dispositif (4) de roue combinée (4') comprend également des moyens (9, 10) de blocage de la rotation dudit bras support (8) autour de l'axe de basculement (AX3), au moins dans deux positions angulaires associées aux configurations de travail. Lors du pivotement du bâti (2) autour de l'axe de retournement (AX1), la roue combinée (4') n'est pas en contact avec le sol. En effet, la roue (4') est dégagée du sol pour basculer autour de l'axe de basculement (AX3) et autour de l'axe de retournement (AX1) du bâti (2). Le mouvement de la roue (4') s'opère sous l'effet de la gravité. Pour le passage d'une configuration de travail à une autre, la roue (4') effectue une rotation de 180° pour se positionner sur le côté opposé du bâti (2). Pour le retournement, la charrue (1) est soulevée du sol au moyen du dispositif d'attelage trois points du véhicule tracteur qui dégage les corps de labour (3, 3') ainsi que la roue (4') du sol. Lorsqu'ils ne sont plus en contact avec le sol, le retournement de la charrue (1) notamment du bâti (2) est initiée et la roue (4') bascule autour de l'axe de basculement (AX3) sous l'effet de son propre poids. Lors du retournement, la roue combinée (4') est dégagée du sol. Dans le contexte de l'invention, la roue combinée (4') tourne avec la charrue (1) lors du retournement, elle ne reste donc pas sur le sol.

La figure 1A illustre une machine sous forme de charrue réversible (1) dans sa configuration de travail, ici labour à droite. Dans la configuration de travail, la charrue (1) est accrochée, via sa tête d'attelage (5), à un dispositif d'attelage trois points du véhicule tracteur, on dit que la charrue est portée. La roue (4') sert au contrôle de la profondeur de travail des corps de labour (3, 3'). Cette roue (4') est implantée soit à l'arrière du bâti (2) ou soit latéralement sur le bâti (2). Sur les figures 1A et 1B, la roue (4') montée en position arrière est représentée en traits continus alors que la roue (4') montée latéralement est représentée en traits discontinus. Lors de la configuration de transport telle que représentée sur la figure 1B, la machine agricole, et particulièrement la charrue (1), repose au sol à l'arrière au moyen de la roue (4') et à l'avant via les deux points d'attelage inférieurs du dispositif d'accrochage trois points. Au transport, la bielle supérieure (non représentée), qui est associée au point d'attelage supérieur, est désaccouplée pour que la charrue (1) puisse être traînée derrière le tracteur (uniquement attachée par les points d'attelage inférieurs) pour épouser les éventuelles dénivellations du terrain. La charrue (1) est alors trainée ou semi-portée à l'arrière du tracteur comme une remorque. Pour ce faire, la charrue (1) est articulée librement par rapport au tracteur autour d'un axe vertical en configuration de transport, cette faculté d'articulation pouvant être intégrée à la charrue au niveau de la tête d'attelage (5), soit existée dans la liaison entre la charrue et le tracteur. Ainsi, on dit qu'une telle charrue est portée au travail et semi-portée au transport. Lorsque la roue remplie la fonction de réglage de profondeur de travail et la fonction d'appui au sol au transport, on parle d'une roue combinée. Les roues (4') représentées sur les figures sont des roues combinées.

La tête d'attelage (5) est équipée d'une suspension (non représentée), sous forme de ressorts volute, disposée à l'avant de part et d'autre de l'axe de retournement (AX1).

Conformément à l'invention, les moyens de blocage (9, 10) comprennent des surfaces de blocage respectives (9', 10'), préférentiellement planes, dont la mise en contact mutuelle bloque la rotation du bras support (8) autour dudit axe de basculement (AX3). La charrue (1) comprend deux moyens (11, 12) de contrôle de cette mise en contact, mutuellement antagonistes et dont l'un (12) au moins est un actionneur commandable. Les surfaces de blocage respectives (9', 10') présentent une certaine longueur de manière à garantir un appui stable et durable. De préférence, la longueur de la surface (10') est plus importante que celle des surfaces (9'). La longueur des surfaces (9') est d'au moins cinq centimètres. D'une manière particulièrement avantageuse et telle que représentée sur les figures, le second moyen de blocage (10) est disposé sous le premier moyen de blocage (9). Ainsi la seconde surface de blocage (10') est positionnée sous les premières surfaces de contact (9'). Les premières et seconde surfaces de contact (9', 10') sont préférentiellement planes, et les premières surfaces (9') se présentent avantageusement sous formes de bandes. Le second moyen de blocage (10) s'étend sous l'axe de basculement (AX3).

Grâce à un blocage par contact surfacique, on aboutit à une configuration de blocage qui est de construction simple, qui est stable une fois engagée et qui est aisée à engager et à libérer (il suffit d'établir ou de rompre le contact entre les deux surfaces). En outre, en mettant en œuvre des moyens de contrôle (11, 12) du type précité, une commande fiable et sécurisée de l'ablocage de la roue combinée (4') est fournie.

En accord avec une réalisation avantageuse de l'invention, un premier (9) des deux moyens de blocage (9, 10) fournit plusieurs surfaces de blocage (9') qui sont réparties angulairement autour de l'axe de basculement (AX3) et qui correspondent au moins aux deux positions angulaires associées aux configurations de travail. Les surfaces de blocage (9') sont orientées perpendiculairement par rapport à l'axe de basculement (AX3). Ce premier moyen de blocage (9) est fixe par rapport au bras de fixation (13) lié au bâti (2), préférentiellement rapporté ou formé sur le palier de l'axe de basculement solidaire du bras de fixation (13). De plus, le second (10) des deux moyens de blocage (9, 10) est monté pivotant autour d'un axe parallèle ou coïncident audit axe de réglage (AX2), la rotation de ce second moyen de blocage (10) formant verrou, autour de cet axe, rapprochant ou éloignant les surfaces de blocage (9', 10') respectivement en regard. Ce second moyen de blocage (10) est par exemple monté solidaire du bras support (8) par le biais de l'axe de réglage (AX2) et accompagne la roue (4') dans sa rotation autour de l'axe de basculement (AX3).

Selon des caractéristiques très favorables de l'invention, ressortant des figures 2 à 4 notamment, un premier (11) des moyens de contrôle (11, 12) fournit une sollicitation permanente en faveur d'un rapprochement des deux moyens de blocage (9, 10) et le second moyen de contrôle (12) est configuré pour pouvoir éloigner les deux moyens de blocage (11, 12) l'un de l'autre, sur commande et suffisamment pour autoriser la libre rotation du bras support (8) autour de l'axe de basculement (AX3). Ainsi, par défaut et en cas de perte de puissance ou d'alimentation au niveau des moyens de contrôle (11, 12), le dispositif (4) de roue combinée (4') est forcé en configuration de blocage en rotation de cette roue autour de l'axe de basculement (AX3).

Conformément à un mode de construction possible de la charrue, le dispositif (4) de roue combinée (4') comprend un bras (13) de fixation au bâti (2), intégrant un palier (14) de l'axe de basculement (AX3) et le premier (9) des deux moyens de blocage (9, 10), lequel comporte avantageusement au moins deux, préférentiellement au moins trois, surfaces de contact (9') planes réparties angulairement autour de l'axe de basculement (AX3) et correspondant chacune à un blocage en basculement de la roue combinée (4') dans une des configurations de la charrue (2). Ces premières surfaces de contact (9') définissent aussi, en coopération avec les secondes surfaces de contact (10'), la position en rotation bloquée de la roue combinée (4') dans chacune de ces configurations de la charrue (1).

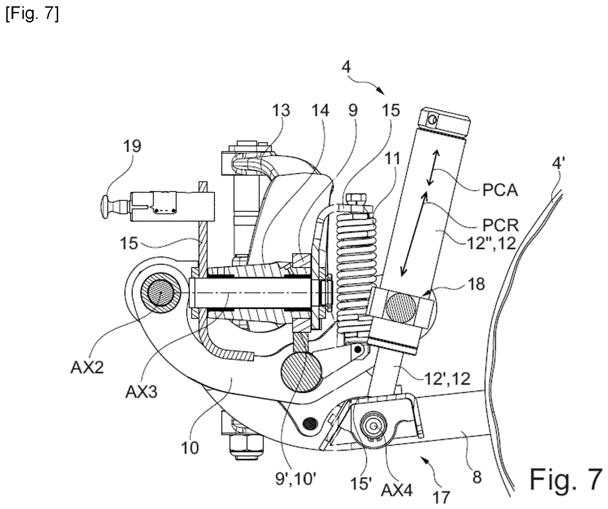

Comme cela ressort des figures 2 à 4, 7 et 8 à titre d'exemple de réalisation, le dispositif (4) de roue combinée (4') comprend un corps central (15) monté pivotant autour de l'axe de basculement (AX3) et intégrant un palier (16) de l'axe de réglage (AX2), le second (10) des deux moyens de blocage (9, 10), formant verrou, étant monté pivotant autour d'un axe sensiblement parallèle ou coïncident audit axe de réglage (AX2). Avantageusement, et en vue d'une construction simple, le second moyen de blocage (10) est monté pivotant autour dudit axe de réglage (AX2).

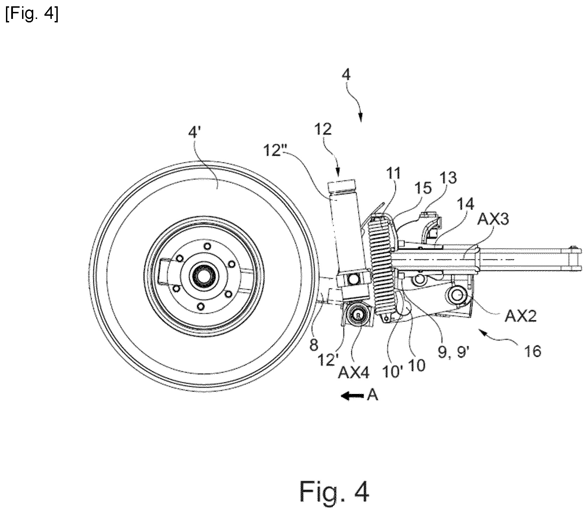

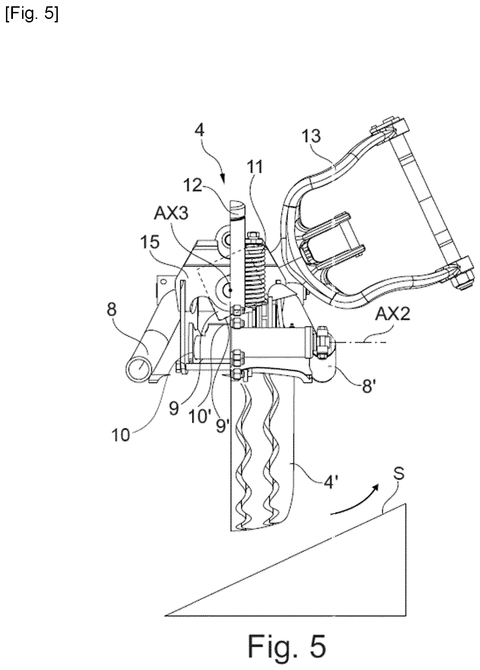

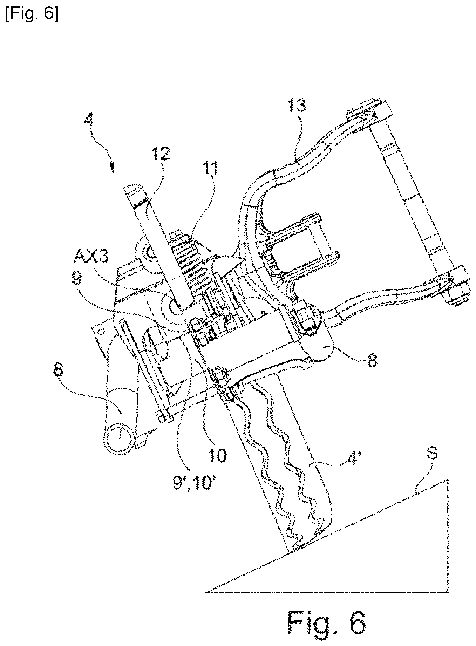

En accord avec une possible construction pratique, simple, efficiente et peu coûteuse, le dispositif (4) de roue combinée (4') comprend un premier moyen de contrôle (11), préférentiellement sous la forme de ressorts de compression ou de traction, produisant une contrainte élastique pour une sollicitation positive de mise et de maintien en contact mutuel des surfaces de blocage (9', 10'), au moins dans les configurations de travail, préférentiellement aussi dans la configuration de transport. La contrainte élastique fournit par ce premier moyen (11) sera notamment suffisante pour déplacer l'ensemble bras support (8) / roue combinée 4'), le cas échéant à l'encontre de la pesanteur, autour de l'axe de basculement (AX3) pour l'amener vers une position stable bloquée, dans laquelle les surfaces (9', 10') concernées par la configuration de la charrue (1) sont mises et maintenues mutuellement en contact. Cette disposition permet notamment à la roue combinée (4') de se retrouver toujours positionnée perpendiculairement au bâti (2) et au sol (S), même lorsque ce dernier est en devers (voir figures 5 et 6). A noter que le centre de gravité du dispositif (4) est situé sous l'axe de basculement (AX3), de manière à générer un couple de rotation suffisant pour le déplacer autour de cet axe de basculement (AX3) sous l'effet de la pesanteur vers une position dans laquelle ledit centre de gravité est aligné verticalement avec cet axe. Le premier moyen de contrôle (11) s'étend entre le corps central (15) et le second moyen de blocage (10). Dans la réalisation privilégiée représentée sur les figures, le premier moyen de contrôle (11) est réalisé par deux ressorts de traction disposé sensiblement verticalement dans la configuration de travail ou dans la configuration de transport sur un sol plan horizontal. Les moyens de blocage (9, 10) sont positionnés entre l'axe de réglage (AX2) et le premier moyen de contrôle (11). Le second moyen de blocage (10) est fixé d'une part sur l'axe de réglage (AX2) et d'autre part sur l'axe (AX5). Avec un dispositif (4) de roue combinée (4') arrière, le premier et le second moyen de blocage (9, 10) s'étendent devant les moyens de contrôle (11, 12) compte tenu de la direction d'avance (A). Avec un dispositif (4) de roue combinée (4') latéral (fig. 4), le premier et le second moyen de blocage (9, 10) s'étendent derrière les moyens de contrôle (11, 12) compte tenu de la direction d'avance (A). Le second moyen de contrôle (12) est implanté entre le bras support (8) et le second moyen de blocage (10), il est en liaison articulée respectivement autour de l'axe (AX4) et l'axe (AX5). Ces deux axes (AX4 et AX5) sont avantageusement parallèles à l'axe de réglage (AX2). Dans une réalisation alternative non représentée, le premier moyen de contrôle (11) est réalisé au moyen d'un seul ressort.

Également dans un contexte de construction pratique avantageuse, il peut être prévu que le dispositif (4) de roue combinée (4') comprenne un second moyen de contrôle (12) sous la forme d'un actionneur, configuré pour écarter les surfaces de blocage (9', 10') l'une de l'autre, avantageusement en surmontant une contrainte élastique de rapprochement desdites surfaces produit par un premier moyen de contrôle (11).

Plus précisément, et de manière préférée, l'actionneur formant le second moyen de contrôle (12) peut être constitué par le vérin de réglage de la position en pivotement du bras support (8) autour de l'axe (AX4). La course du vérin de réglage permet un réglage de la position de la roue (4') par rapport au bâti (2). Ce vérin commande la profondeur de travail des corps de labour (3, 3'). Cet actionneur comporte une partie de course additionnelle (PCA), au-delà de la position relevée maximale de la roue (4'), permettant un éloignement suffisant des surfaces de blocage (9', 10') concernées des deux moyens de blocage (9 et 10) pour autoriser un libre pivotement de la roue combinée (4') autour de l'axe de basculement (AX3). La course de réglage de la profondeur de travail (PCR) est plus importante que la course additionnelle (PCA). La tige (12') du vérin (12) est relié au bras support (8), ou préférentiellement à une traverse reliant les deux branches de ce bras support (8), par une liaison pivot (17) d'axe (AX4) et le fût (12") de ce vérin (12) est relié par une liaison pivot (18) d'axe (AX5) au second moyen de blocage ou verrou (10), à l'opposé de son montage sur l'axe (AX2).

Comme illustré également sur les figures 2 à 8, il est avantageusement prévu que le second moyen de contrôle (12) est situé au-dessus du bras support (8), que ledit corps central (15) présente des moyens de butée (15') pour ledit bras support (8) qui définissent la position relevée maximale de la roue combinée (4') et que la partie de course additionnelle (PCA) du vérin de réglage (12), après venue en butée du bras support (8), est suffisante pour déplacer le second moyen de blocage (10) par rapport au premier moyen de blocage (9) de telle manière que les deux moyens (9 et 10) soient non interférents lors d'une rotation du bras support (8) avec la roue (4') autour de l'axe de basculement (AX3).

Afin d'augmenter encore la sécurité au transport, le dispositif (4) de roue combinée (4') peut comprendre un moyen (19) de verrouillage du bras support (8) en rotation autour de l'axe de basculement (AX3) dans une position adaptée pour un roulement en configuration de transport. Ce moyen (19) supplémentaire peut par exemple se présenter sous la forme d'un loquet assujettissant mécaniquement le bras support (8) au bras de fixation (13), voir la figure 1B.

Selon une autre caractéristique constructive de l'invention, le premier moyen de blocage (9) se présente préférentiellement sous la forme d'une plaque carrée ou rectangle, avantageusement aux angles arrondis, deux côtés opposés correspondant aux surfaces (9') contactées par la surface de blocage (10') du verrou (10) formant le second moyen de blocage dans les configurations de travail et un autre côté étant éventuellement contacté par cette surface de blocage (10') dans la configuration de transport, en vue du blocage en rotation du bras support (8) autour de l'axe de basculement (AX3). Ce mode de réalisation du moyen de blocage (9) autorise un glissement relatif par rapport à la surface de contact (10') du second moyen de blocage (10), sous l'action des ressorts (11), jusqu'à venir en position de blocage calée avec contact surfacique. D'une manière avantageuse et selon la représentation illustrée à la figure 5, lors du retournement de la charrue (1) et par conséquent du dispositif (4) de roue combinée (4'), la forme carrée, notamment les angles, du premier moyen de blocage (9) permet un point de contact avec le second moyen de blocage (10) c'est-à-dire avec la surface de blocage (10'). Le point de contact du premier moyen de blocage (9) avec le second moyen de blocage (10) est décalé latéralement par rapport à un plan vertical passant par l'axe de basculement (AX3). Dans une alternative, le premier moyen de blocage (9) se présente sous la forme d'une plaque rectangulaire. Les deux côtés de longueur plus importantes correspondent aux surfaces (9') qui seront en contact respectivement avec le second moyen de blocage (10), en contact avec la surface de blocage (10') du verrou (10), selon la configuration de travail. La plaque rectangulaire dispose également d'angles arrondis.

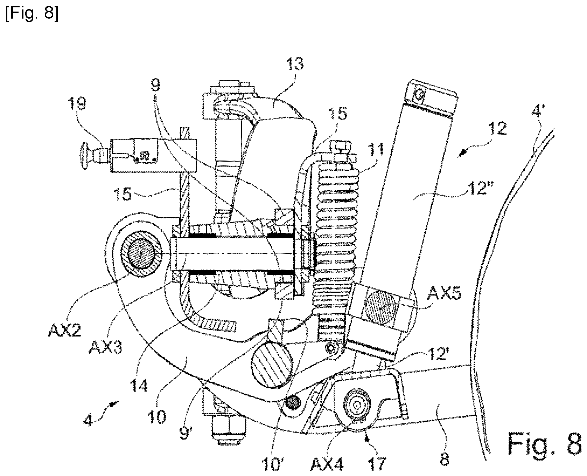

La Figure 8 montre en détail le dispositif (4) de roue selon un plan contenant l'axe de basculement (AX3) et perpendiculaire à l'axe de réglage (AX2) du bras support (8) à l'état déverrouillé. La roue combinée (4') est libre en rotation autour de son axe de basculement (AX3). Dans cet état déverrouillé, les moyens de blocage (9, 10), notamment les surfaces de blocage (9', 10'), sont à distance l'un de l'autre. La distance entre les surfaces de blocage (9', 10') est sensiblement plus importante avec une plaque de forme rectangulaire qu'avec une plaque de forme carrée.

Bien entendu, l'invention n'est pas limitée aux modes de réalisation décrits et représentés aux dessins annexés. Des modifications restent possibles, notamment du point de vue de la constitution des divers éléments ou par substitution d'équivalents techniques, sans sortir pour autant du domaine de protection de l'invention.

## Revendications

1. Charrue réversible (1) configurée pour être portée en configuration de travail par le dispositif d'attelage trois points du véhicule tracteur et comprenant, d'une part, un bâti (2) portant des corps de labour (3, 3') et équipé d'un dispositif (4) de roue combinée (4') et, d'autre part, une tête d'attelage (5) pour son accrochage à un véhicule tracteur,
ladite roue combinée (4') contrôlant la profondeur de travail des corps de labour (3, 3'),
ledit bâti (2) étant relié à la tête d'attelage (5) par une liaison pivot (6) définissant un axe de retournement (AX1) pour le passage réversible d'une configuration de travail à l'autre, par pivotement d'environ un demi-tour et préférentiellement sous l'effet d'un actionneur (7),
ladite charrue (1) pouvant également être transposée, par pivotement d'un quart de tour environ du bâti (2), depuis une des configurations de travail dans une configuration de transport dans laquelle elle est trainée par traction et roule en appui sur ladite au moins une roue combinée (4'),
ledit dispositif (4) de roue combinée (4') comprenant au moins un bras support (8) portant la roue (4') et monté à pivotement autour d'un axe (AX2) de réglage de la position en profondeur de la roue (4') et un axe de basculement (AX3) autorisant un basculement de la roue (4') avec son bras support (8) sous l'effet de son propre poids lors du retournement du bâti (2) pour passer d'une configuration de travail à l'autre, ou vers la configuration de transport, ledit axe de basculement (AX3) étant sensiblement parallèle à l'axe de retournement (AX1) et sensiblement perpendiculaire à l'axe de réglage (AX2), et ledit dispositif (4) de roue combinée (4') comprenant également des moyens (9, 10) de blocage de la rotation dudit bras support (8) autour de l'axe de basculement (AX3), au moins dans deux positions angulaires associées aux configurations de travail,
charrue (1) dont lesdits moyens de blocage (9, 10) comprennent des surfaces de blocage respectives (9', 10'), préférentiellement planes, dont la mise en contact mutuelle bloque la rotation du bras support (8) autour dudit axe de basculement (AX3) et en ce qu'elle comprend deux moyens (11, 12) de contrôle de cette mise en contact, mutuellement antagonistes et dont l'un (12) au moins est un actionneur commandable.

2. Charrue selon la revendication 1, **caractérisée en ce qu'**un premier (9) des deux moyens de blocage (9, 10), fournissant plusieurs surfaces de blocage (9') réparties angulairement autour de l'axe de basculement (AX3) et correspondant au moins aux deux positions angulaires associées aux configurations de travail, est fixe par rapport au bras de fixation (13) et **en ce qu'**un second (10) des deux moyens de blocage (9, 10) est monté pivotant autour d'un axe parallèle ou coïncident audit axe de réglage (AX2), la rotation de ce second moyen de blocage (10) formant verrou autour de cet axe rapprochant ou éloignant les surfaces de blocage (9', 10') respectivement en regard.

3. Charrue selon la revendication 1 ou 2, **caractérisée en ce qu'**un premier (11) des moyens de contrôle (11, 12) fournit une sollicitation permanente en faveur d'un rapprochement des deux moyens de blocage (9, 10) et **en ce que** le second moyen de contrôle (12) est configuré pour pouvoir éloigner les deux moyens de blocage (11, 12) l'un de l'autre, sur commande et suffisamment pour autoriser la libre rotation du bras support (8) autour de l'axe de basculement (AX3).

4. Charrue selon l'une quelconque des revendications 1 à 3, **caractérisée en ce que** le dispositif (4) de roue combinée (4') comprend un bras (13) de fixation au bâti (2), intégrant un palier (14) de l'axe de basculement (AX3) et le premier (9) des deux moyens de blocage (9, 10), lequel comporte avantageusement au moins deux surfaces de contact (9') planes réparties angulairement autour de l'axe de basculement (AX3) et correspondant chacune à un blocage en basculement de la roue combinée (4') dans une des configurations de la charrue (1).

5. Charrue selon l'une quelconque des revendications 1 à 4, **caractérisée en ce que** le dispositif (4) de roue combinée (4') comprend un corps central (15) monté pivotant autour de l'axe de basculement (AX3) et intégrant un palier (16) de l'axe de réglage (AX2), un second (10) des deux moyens de blocage (9, 10), formant verrou, étant monté pivotant autour d'un axe sensiblement parallèle audit axe de réglage (AX2).

6. Charrue selon l'une quelconque des revendications 1 à 5, **caractérisée en ce que** le dispositif (4) de roue combinée (4') comprend un premier moyen de contrôle (11), préférentiellement sous la forme de ressorts de compression ou de traction, produisant une contrainte élastique pour une sollicitation positive de mise et de maintien en contact mutuel des surfaces de blocage (9', 10'), au moins dans les configurations de travail.

7. Charrue selon l'une quelconque des revendications 1 à 6, **caractérisée en ce que** le dispositif (4) de roue combinée (4') comprend un second moyen de contrôle (12) sous la forme d'un actionneur, configuré pour écarter les surfaces de blocage (9', 10') l'une de l'autre, avantageusement en surmontant une contrainte élastique de rapprochement desdites surfaces produit par un premier moyen de contrôle (11).

8. Charrue selon la revendication 7, **caractérisée en ce que** l'actionneur (12) formant le second moyen de contrôle est constitué par un vérin de réglage de la position en pivotement du bras support (8) autour de l'axe (AX2), cet actionneur comportant une partie de course additionnelle, au-delà de la position relevée maximale de la roue (4'), permettant un éloignement suffisant des surfaces de blocage (9', 10') concernées des deux moyens de blocage (9 et 10) pour autoriser un libre pivotement de la roue combinée (4') autour de l'axe de basculement (AX3).

9. Charrue selon la revendication 8, **caractérisée en ce que** le second moyen de contrôle (12) est situé au-dessus du bras support (8), **en ce que** ledit corps central (15) présente des moyens de butée (15') pour ledit bras support (8) qui définissent la position relevée maximale de la roue combinée (4') et **en ce que** la partie de course additionnelle du second moyen de contrôle (12), après venue en butée du bras support (8), est suffisante pour déplacer le second moyen de blocage (10) par rapport au premier moyen de blocage (9) de telle manière que les deux moyens (9 et 10) soient non interférents lors d'une rotation du bras support (8) avec la roue (4') autour de l'axe de basculement (AX3).

10. Charrue selon l'une quelconque des revendications 1 à 9, **caractérisée en ce que** le dispositif (4) de roue combinée (4') comprend un moyen (19) de verrouillage du bras support (8) en rotation autour de l'axe de basculement (AX3) dans une position adaptée pour un roulement en configuration de transport.

11. Charrue selon la revendication 4, **caractérisée en ce que** le premier moyen de blocage (9) se présente sous la forme d'une plaque carrée ou rectangle, avantageusement aux angles arrondis, deux côtés opposés correspondant aux surfaces (9') contactées par la surface de blocage (10') du verrou (10) formant le second moyen de blocage dans les configurations de travail et un autre côté étant éventuellement contactée par cette surface de blocage (10') dans la configuration de transport, en vue du blocage en rotation du bras support (8) autour de l'axe de basculement (AX3).

12. Charrue selon l'une quelconque des revendications 1 à 11, **caractérisée en ce que** le second moyen de blocage (10) est monté solidaire du bras support (8) et pivotant autour dudit axe de réglage (AX2).

## Patentansprüche

1. Wendepflug (1) der so konfiguriert ist, dass er in Arbeitskonfiguration von der Dreipunktkupplungsvorrichtung des Zugfahrzeugs getragen werden kann und einerseits einen Rahmen (2), der Pflugkörper (3, 3') trägt und mit einer Kombirad (4') Vorrichtung (4) ausgestattet ist, und andererseits einen Kupplungskopf (5) zum Ankuppeln an ein Zugfahrzeug umfasst,
wobei das Kombirad (4') die Arbeitstiefe der Pflugkörper (3, 3') steuert,
wobei der Rahmen (2) mit dem Kupplungskopf (5) über eine Schwenkverbindung (6) verbunden ist, die eine Wendeachse (AX1) für den umkehrbaren Übergang von einer Arbeitskonfiguration zur anderen durch Schwenken um etwa eine halbe Umdrehung und vorzugsweise unter der Wirkung eines Aktuators (7) definiert,
wobei der Pflug (1) auch durch Schwenken des Rahmens (2) um etwa eine Vierteldrehung aus einer der Arbeitskonfigurationen in eine Transportkonfiguration gebracht werden kann, in der er gezogen wird und auf dem mindestens einen Kombirad (4') rollt,
wobei die Kombirad (4') Vorrichtung (4) mindestens einen das Rad tragenden Auflagearm (8) umfasst, der um eine Einstellachse (AX2) für die Tiefenposition des Rades (4') schwenkbar angebracht ist, sowie eine Kippachse (AX3), die ein Kippen des Rades (4') mit seinem Auflagearm (8) unter der Wirkung seines Eigengewichts beim Wenden des Rahmens (2) ermöglicht, um von einer Arbeitskonfiguration in die andere oder in die Transportkonfiguration zu wechseln, wobei die Kippachse (AX3) im Wesentlichen parallel zur Wendeachse (AX1) und im Wesentlichen senkrecht zur Einstellachse (AX2) verläuft und die Kombirad (4') Vorrichtung (4) außerdem Mittel (9, 10) umfasst, um die Drehung des Auflagearms (8) um die Kippachse (AX3) zumindest in zwei Winkelpositionen zu verriegeln, die den Arbeitskonfigurationen zugeordnet sind,
Pflug (1), dessen Verriegelungsmittel (9, 10) jeweilige, vorzugsweise ebene Verriegelungsflächen (9', 10') umfassen, deren gegenseitige Berührung die Drehung des Auflagearms (8) um die Kippachse (AX3) blockiert, und die zwei gegeneinander wirkende Mittel (11, 12) zur Steuerung dieser Berührung umfasst, von denen mindestens eines (12) ein steuerbarer Aktuator (7) ist.

2. Pflug nach Anspruch 1, **dadurch gekennzeichnet, dass** ein erstes (9) der beiden Verriegelungsmittel (9, 10) mehrere Verriegelungsflächen (9') aufweist, die winklig um die Kippachse (AX3) verteilt sind und mindestens den beiden Winkelpositionen entsprechen, die den Arbeitskonfigurationen zugeordnet sind, in Bezug auf den mit dem Rahmen (2) verbundenen Befestigungsarm (13) feststehend ist, und dass ein zweites (10) der beiden Verriegelungsvorrichtungen (9, 10) um eine Achse schwenkbar angebracht ist, die parallel zu oder mit der Einstellachse (AX2) übereinstimmt, wobei die Drehung dieser zweiten Verriegelungsvorrichtung (10), die eine Verriegelung bildet, um diese Achse die einander gegenüberliegenden Verriegelungsflächen (9', 10') näher zusammenbringt oder voneinander entfernt.

3. Pflug nach Anspruch 1 oder 2, **dadurch gekennzeichnet, dass** ein erstes (11) der Steuerungsmittel (11, 12) eine permanente Kraft ausübt, die eine Annäherung der beiden Verriegelungsmittel (9, 10) bewirkt, und dass das zweite Steuerungsmittel (12) so konfiguriert ist, dass es die beiden Verriegelungsmittel (9, 10) auf Befehl voneinander wegbewegen kann, und zwar so weit, dass sich der Auflagearm (8) frei um die Kippachse (AX3) drehen kann.

4. Pflug nach einem der Ansprüche 1 bis 3, **dadurch gekennzeichnet, dass** die Kombirad (4') Vorrichtung (4) einen Arm (13) zur Befestigung am Rahmen (2) umfasst, der ein Lager (14) der Kippachse (AX3) und das erste (9) der beiden Verriegelungsmittel (9, 10) umfasst, das vorteilhafterweise mindestens zwei ebene Kontaktflächen (9') aufweist, die winklig um die Kippachse (AX3) verteilt sind und jeweils einer Kippblockierung des Kombirads (4') in einer der Konfigurationen des Pflugs (2) entsprechen.

5. Pflug nach einem der Ansprüche 1 bis 4, **dadurch gekennzeichnet, dass** die Kombirad (4') Vorrichtung (4) einen zentralen Körper (15) umfasst, der um die Kippachse (AX3) schwenkbar angebracht ist und ein Lager (16) der Einstellachse (AX2) integriert, wobei ein zweite (10) der beiden Verriegelungsmittel (9, 10), das eine Verriegelung bildet, um eine Achse schwenkbar angebracht ist, die im Wesentlichen parallel zu der Einstellachse (AX2) ist.

6. Pflug nach einem der Ansprüche 1 bis 5, **dadurch gekennzeichnet, dass** das Kombirad (4') Vorrichtung (4) ein erstes Steuerungsmittel (11) umfasst, vorzugsweise in Form von Druck- oder Zugfedern, das eine elastische Spannung erzeugt, um eine positive Spannung zum gegenseitigen Kontakt der Verriegelungsflächen (9', 10') zu erzeugen und aufrechtzuerhalten, zumindest in den Arbeitskonfigurationen.

7. Pflug nach einem der Ansprüche 1 bis 6, **dadurch gekennzeichnet, dass** die Kombirad (4') Vorrichtung (4) ein zweites Steuerungsmittel (12) in Form eines Aktuators umfasst, das so konfiguriert ist, dass es die Verriegelungsflächen (9', 10') voneinander entfernt, vorzugsweise durch Überwindung einer durch ein erstes Steuerungsmittel (11) erzeugten elastischen Spannung, die die Flächen aufeinander zu drückt.

8. Pflug nach Anspruch 7, **dadurch gekennzeichnet, dass** der Aktuator, der das zweite Steuerungsmittel (12) bildet, aus dem Zylinder bestehen, der die Schwenkposition des Auflagearms (8) um die Achse (AX4) einstellt, wobei dieser Aktuator ein zusätzlichen Hubabschnitt über die maximale angehobene Position des Rades (4') hinaus, der einen ausreichenden Abstand zwischen den betreffenden Verriegelungsflächen (9', 10') der beiden Verriegelungsmittel (9 und 10) zu erreichen ermöglicht, um ein freies Schwenken des Kombirads (4') um die Kippachse (AX3) zu ermöglichen.

9. Pflug nach Anspruch 8, **dadurch gekennzeichnet, dass** sich das zweite Steuerungsmittel (12) über dem Auflagearm (8) befindet, dass der zentrale Körper (15) Anschlagmittel (15') für den Auflagearm (8) aufweist, die die maximale angehobene Position des Kombirads (4') definieren, und dass der zusätzliche Hubabschnitt (PCA) des Steuerungsmittels (12) nach dem Anschlagen des Auflagearms (8) ausreicht, um das zweite Verriegelungsmittel (10) relativ zum ersten Verriegelungsmittel (9) so zu verschieben, dass die beiden Mittel (9 und 10) bei einer Drehung des Auflagearms (8) mit dem Rad (4') um die Kippachse (AX3) nicht ineinander greifen.

10. Pflug nach einem der Ansprüche 1 bis 9, **dadurch gekennzeichnet, dass** die Kombirad (4') Vorrichtung (4) ein Mittel (19) zum Verriegeln des Auflagearms (8) in Drehung um die Kippachse (AX3) in einer für das Rollen in Transportkonfiguration geeigneten Position umfasst.

11. Pflug nach Anspruch 4, **dadurch gekennzeichnet, dass** das erste Verriegelungsmittel (9) vorzugsweise die Form einer quadratischen oder rechteckigen Platte aufweist, vorzugsweise mit abgerundeten Ecken, wobei zwei gegenüberliegende Seiten den Flächen (9') entsprechen, die von der Verriegelungsfläche (10') der Verriegelung (10) berührt werden, die in den Arbeitskonfigurationen das zweite Verriegelungsmittel bildet, und eine weitere Seite gegebenenfalls von dieser Verriegelungsfläche (10') in der Transportkonfiguration berührt wird, um den Auflagearm (8) um die Kippachse (AX3) gegen Drehung zu sichern.

12. Pflug nach einem der Ansprüche 1 bis 11, **dadurch gekennzeichnet, dass** das zweite Verriegelungsmittel (10) fest mit dem Auflagearm (8) verbunden ist und um die Einstellachse (AX2) schwenkbar ist.

## Claims

1. Reversible plough (1) configured to be carried in working configuration by the three-point hitching device of the tractor vehicle and comprising, on the one hand, a fame (2) carrying plough bodies (3, 3') and equipped with a combined wheel (4') device (4) and, on the other hand, a hitching head (5) for attaching it to a tractor vehicle,
the said combined wheel (4') controlling the working depth of the plough bodies (3, 3'),
the said frame (2) being connected to the hitching head (5) by a pivot connection (6) defining a turnover axis (AX1) for the reversible transition from one working configuration to the other, by pivoting approximately half a turn and preferably under the effect of an actuator (7),
the said plough (1) also being able to be transposed, by pivoting the frame (2) through approximately a quarter turn, from one of the working configurations into a transport configuration in which it is towed by traction and rolls supported on the said at least one combined wheel (4'),
the said combined wheel (4') device (4) comprising at least one support arm (8) carrying the wheel (4') and mounted so as to pivot around an adjustment axis (AX2) for the position of the wheel (4') in depth and a tilting axis (AX3) allowing the wheel (4') to tilt with its support arm (8) under the effect of its own weight when turning the frame (2) over to move from one working configuration to another, or to the transport configuration, the said tilting axis (AX3) being substantially parallel to the turnover axis (AX1) and substantially perpendicular to the adjustment axis (AX2), and the said combined wheel (4') device (4) also comprising means (9, 10) for blocking the rotation of the said support arm (8) around the tilting axis (AX3), at least in two angular positions associated with the working configurations,
plough (1), wherein the said blocking means (9, 10) comprise respective blocking surfaces (9', 10'), preferably flat, whose mutual contact blocks the rotation of the support arm (8) around the said tilting axis (AX3), and in that it comprises two mutually antagonistic means (11, 12) for controlling this contact, at least one (12) of which is a controllable actuator.

2. Plough according to claim 1, **characterised in that** a first (9) of the two blocking means (9, 10), providing several blocking surfaces (9') which are distributed angularly around the tilting axis (AX3) and which correspond at least to the two angular positions associated with the working configurations, is fixed relative to the fixing arm (13) and **in that** a second (10) of the two blocking means (9, 10) is mounted so as to pivot around an axis parallel or coincident with the said adjustment axis (AX2), the rotation of this second blocking means (10) forming a lock around this axis bringing the respective blocking surfaces (9', 10') closer together or further apart.

3. Plough according to claim 1 or 2, **characterised in that** one first (11) of the control means (11, 12) provides a permanent force favouring the bringing together of the two blocking means (9, 10) and **in that** the second control means (12) is configured to be able to move the two blocking means (11, 12) away from each other, on command and sufficiently to allow the support arm (8) to rotate freely around the tilting axis (AX3).

4. Plough according to any one of claims 1 to 3, **characterised in that** the combined wheel (4') device (4) comprises an arm (13) for fixing to the frame (2), incorporating a bearing (14) for the tilting axis (AX3) and the first (9) of the two blocking means (9, 10), which advantageously comprises at least two flat contact surfaces (9') distributed angularly around the tilting axis (AX3) and each corresponding to a blocking of the tilting of the combined wheel (4') in one of the configurations of the plough (1).

5. Plough according to any one of claims 1 to 4, **characterised in that** the combined wheel (4') device (4) comprises a central body (15) mounted to pivot around the tilting axis (AX3) and incorporating a bearing (16) for the adjustment axis (AX2), a second (10) of the two blocking means (9, 10), forming a lock, being mounted so as to pivot around an axis substantially parallel to or coinciding with the said adjustment axis (AX2).

6. Plough according to any one of claims 1 to 5, **characterised in that** the combined wheel device (4') comprises a first control means (11), preferably in the form of compression or traction springs, producing an elastic stress for positive engagement and holding of the blocking surfaces (9', 10') in mutual contact, at least in the working configurations.

7. Plough according to any one of claims 1 to 6, **characterised in that** the combined wheel (4') device (4) comprises a second control means (12) in the form of an actuator, configured to move the blocking surfaces (9', 10') away from each other, advantageously by overcoming an elastic force drawing the said surfaces together produced by a first control means (11).

8. Plough according to claim 7, **characterised in that** the actuator (12) forming the second control means consists in a cylinder for adjusting the pivoting position of the support arm (8) around the axis (AX2), this actuator including an additional stroke portion, beyond the maximum raised position of the wheel (4'), allowing sufficient distance from the blocking surfaces (9', 10') involved in the two blocking means (9 and 10) to allow free pivoting of the combined wheel (4') around the tilting axis (AX3).

9. Plough according to claim 8, **characterised in that** the second control means (12) is located above the support arm (8), that the said central body (15) has stop means (15') for the said support arm (8) which define the maximum raised position of the combined wheel (4'), and that the additional stroke portion of the second control means (12), after the support arm (8) has reached the stop, is sufficient to move the second blocking means (10) relative to the first blocking means (9) in such a way that the two means (9 and 10) do not interfere with each other when the support arm (8) rotates with the wheel (4') around the tilting axis (AX3).

10. Plough according to any one of claims 1 to 9, **characterised in that** the combined wheel (4') device (4) may comprise a means (19) for locking the support arm (8) in rotation around the tilting axis (AX3) in a position suitable for rolling in the transport configuration.

11. Plough according to claim 4, **characterised in that** the first blocking means (9) takes the form of a square or rectangular plate, advantageously with rounded corners, two opposite sides corresponding to the surfaces (9') contacted by the blocking surface (10') of the lock (10) forming the second blocking means in the working configurations and another side possibly being contacted by this blocking surface (10') in the transport configuration, with the aim of blocking the rotation of the support arm (8) around the tilting axis (AX3).

12. Plough according to any one of claims 1 to 11, **characterised in that** the second blocking means (10) is mounted integrally with the support arm (8) and pivots around the said adjustment axis (AX2).
